# EUROPEAN PATENT APPLICATION

(11) **EP 2 243 709 A1**
(43) Date of publication of application: **27.10.2010**
(21) Application number: 09005790.2
(22) Date of filing: 25.04.2009
(51) Int. Cl.: B65B 43/12, C02F 9/00

(54) **A mobile apparatus for packing edible liquids**

(71) Applicant: Nestec S.A., 1800 Vevey (CH)
(72) Inventor: Cerveny, Mr. Jean-Paul, 88800 Vittel (FR); Detrois, Christian, 88190 Golbey (FR); Hartwig, Klaus, 54000 Nancy (FR); Lüpke, Erik, 54000 Nancy (FR); Vigny-Schmitt, Murielle, 88000 Vittel (FR)

(57) **Abstract**

The present invention is directed to an apparatus for the delivery of safe beverages, preferably safe drinkable water, **characterized in that** it comprises a combination of :
(i) at least one water-pumping unit (1) suitable for pumping unsafe drinkable water (2) from a water source (3), said water pumping unit (1) comprising means (4, 16) for establishing a fluid communication with
(ii) at least one water treatment unit (5) suitable for producing safe drinkable water (6) by chemical and/or physical treatment of the water (2) pumped from said source (3), said water-treatment unit (5) comprising means (4) for establishing a fluid communication with
(iii) at least one water packing unit (8) suitable for packing said safe water (6) into individual packages (9) for delivery to individual consumers,
(iv) said apparatus being further **characterized in that** at least one of the three units (1, 5, 8) is mobile.

## Description

### Field of the invention

The present invention concerns a mobile apparatus for dispensing edible liquids. More particularly, it is directed to a mobile apparatus capable of pumping and/or producing, storing and packing drinkable water.

### Background of the invention

Providing safe water in remote, undeveloped or disaster-stricken regions of the world has recently become a challenge. As world population is increasing, the demand in safe water or drinkable water that can be distributed in safe, economic and ecologic conditions is also increasing.

The current existing systems for packing and distributing water are however stationary, industrial equipment that provides large output production solutions for packing drinkable water in containers such as plastic bottles. Such bottles then have to be transported to the point of consumption.

Examples of such packing equipments are described in prior art publications as follows.

GB 2342082 (filed on 29.09.1998 by Smith David Packaging) deals with a machine that obliquely seals flexible containers and subsequently fills said containers with liquid. The oblique seals are preferably adjacent an outlet of the container such as the filling and dispensing spout, to enhance the flow during dispensing of liquid from said containers. The flexible containers can be the filled bags in bag-in-box applications for the dispensing of a product such as wine, the oblique seals aiding loading of the filled bags into the boxes. The machine preferably comprises a plurality of stations with the sealing station upstream of a filling station. If the containers are supplied as a web of containers there is a station between the sealing and filling stations to separate the containers.

US 5782380 (filed on 27.09.1996 by Pure Fill Corp.) discloses a water dispenser comprising a plurality of water filling stations located side by side in a single sink. Each station includes an intermediate shelf. A filling station is coupled to each of the stations and selectively provides one of a plurality of predetermined water volumes with a single actuation.

US 5582717 (filed on 26.04.1993 by di Santo Dennis) concerns a self service water dispensing apparatus especially adapted to be located inside a grocery store. This apparatus includes a housing which provides a rigid support structure having a base section which has integral therewith a water storage tank, and an upper section immediately above the base section which includes a plurality of water filling stations. The upper section and base section are joined together and are contiguous with each other along a common generally horizontal plane located about waist high to a typical adult user. This provides a compact and convenient to use structure. The water filling stations each comprise a recessed cubicle having a top wall with a delivery spout therein, an open front side into which a water bottle is placed beneath the spout for filling, and a floor including a drain [...].

US 4549387 (filed on 06.07.1983 by A.C.I Australia Ltd.) discloses apparatus and method is provided for packaging a flowable material in bag containers. The apparatus comprises a support stand and, mounted thereon, a filling station, a sealing station, and support means, the stations being in spaced, side by side relation. The support means has a support surface on which successive containers are receivable, and which is movable relative to the stations from a position in which a container received thereon is presented in turn to the filling station and the sealing station. The filling station has a filler head connectable to a source of supply of the flowable material and engageable with an opening of the container for discharge of a quantity of the material into the container. The sealing station has sealing means for receiving the container opening, the sealing means being connected to an electric power source and being operable to grip the opening and form a heat seal thereacross.

EP 0056701 (filed on 12.01.1982 by Wrightcell Ltd.) deals with a filling station for filling flexible containers with liquid. The filling head is fixed. The container is gripped by clamps and brought into abutment with a seal at the filling head outlet. The container is filled and subsequently while the container is still in abutment with the filling head it is heat sealed by a sealing member. The container is then removed.

US 4120134 (filed on 05.07.1977 by Scholle Corp.) relates to apparatus for and method of filling flexible containers, each having a spout adapted to be closed by a separable cap, **characterized in that** the containers are connected together seriatim in a continuous row and are fed automatically one after another to a filling and capping station, rather than being hand fed one at a time to the station. This results in increased speed of operation and decreased labor costs. In one embodiment the containers are moved seriatim to the filling station by an intermittently operated conveyor. In another embodiment the weight of the filled containers pulls succeeding empty containers to the filling and capping station. At the station, between the filling and capping steps, the container is manipulated so as to seal off the spout and prevent entry of foreign matter to the container during the time between removal of the filling nozzle from the spout and application of the cap to the filled container.

The solutions disclosed above, however do not apply to transportation handling in regions of consumption with limited access for heavy loads like deserts, remote regions, city centres in developing countries, or disaster-stricken regions. In case such a transport to a remote point of consumption is possible, the costs involved in transportation are very high, and often incompatible with the local populations consumer spending power.

Moreover, the existing industrial solutions described in the art, for instance in the publications above, require that the packages used withstand high mechanical constraints during handling and transportation. Therefore, such packages are reinforced mechanically, which is incompatible with ecologic and economic objectives. In case the product would be anyhow be filled in very light packages, then a transportation to points of consumption that are geographically remote or difficult to access, cannot be envisaged because these packages will inevitably be damaged during transportation.

The main problem to be solved by the present invention is therefore to provide a system for delivering at a low cost and ecologically, safe drinkable water, or other similar beverages, to consumers that are located in areas which are remote or generally difficult to access by usual consumer goods distribution networks.

### Summary of the invention

Such a problem is solved by the present invention with an apparatus for the delivery of safe beverages, preferably safe drinkable water, **characterized in that** it comprises a combination of at least :
(i) one water-pumping unit suitable for pumping unsafe drinkable water from a water source, said water pumping unit comprising means for establishing a fluid communication with
(ii) one water treatment unit suitable for producing safe drinkable water by chemical and physical treatment of the water pumped from said source, said water-treatment unit comprising means for establishing a fluid communication with
(iii) one water packing unit suitable for packing said safe water into individual packages for delivery to individual consumers,
said apparatus being further **characterized in that** at least one of the three units is mobile.

In a preferred embodiment of the invention, the apparatus further comprises a water storing unit for storing water treated by the water treatment unit, said water storing unit being disposed between, and in fluid communication with, the water treatment unit and the water packing unit.

Advantageously, the storing unit comprises a tank and pressurizing means for pressurizing a gas into the headspace of the tank, and furthermore, the gas used for the tank pressurization is preferably nitrogen. Such a gas does not influence the taste and chemical characteristics of the water stored in the tank, and is not harmful to the consumers health.

Preferably, said pumping unit comprises a pump, a pipe network, optionally equipped with a strainer, suitable for pumping water from a water tower, a water pond, river, lake, sea, or from a well or similar underground natural water source.

In any case, the water treatment unit preferably comprises filtering, microfiltering, and/or biochemical treatment means and/or reverse osmosis means suitable for producing safe drinkable water out of the pumped water. This is especially important in case the source water is pumped locally, for instance in a pond or lake which is contaminated, and wherein the source water that is used for packing and distributing is initially not safe.

In an embodiment of the present invention, the pumping and treatment units are disposed in a container - preferably a transportation freight container according to ISO standards - comprising attachment means for removably attaching said container onto/into such transportation systems as truck platforms, ships, planes, or trains.

This allows for easy handing and transportation of the different units constitutive of the apparatus according to the invention, so that the latter can be used in different places with minimal logistics. This can prove to be particularly useful for instance in case the apparatus is to be used in areas that are difficult to reach, and for which temporary distribution of water is critical, eg. after an earthquake, or in case of floodings, i.e. when safe source or tap water is locally not available anymore, and when there is no sufficient time to build a water treatment and bottling factory.

Preferably, the movable container described hereinbefore further comprises means for being lifted by conventional crane systems, for easier handling.

In a highly preferred embodiment of the present invention, the said water packing unit comprises:
(i) a stock of packages,
(ii) filling means for aseptically filling a package with safe water that has been treated within the treatment unit, and
(iii) sealing means for sealing said package after its filling,
(iv) a distributing system for the delivery of the filled and sealed individual packages to a consumer.

In the latter embodiment, said water packing unit is preferably a one-use hermetically closed cartridge.

In the last embodiment described hereinabove, the said filling means advantageously comprises at least one pair of rolls for holding the package, said rolls comprising cooperating grooves that define a passage through which a filling needle can move to fill the package.

In that case, the stock of packages preferably comprises premade film pouches stored as a continuous roll, so that to adjacent pouches in the roll are linked in a detachable manner by a precut line, the said packages are more preferably non reclosable.

According to another particular possible embodiment of the present invention, the premade package is containing dry or liquid ingredients such as flavours, minerals, plant extracts, vitamins, sugar/sweetener, nutritional complements, preservatives prior to its final filling.

In one embodiment, in the case the apparatus of the invention packs the beverage for the consumer into pouches, each pouch has several separate chambers that can be arranged in different configurations, so that it is self standing with a base area similar to a circle, snail, star, triangle or bar-bell.

In a highly preferred embodiment of the present invention, the apparatus is contained into a transportation freight container preferably a container according to ISO standards ISO 668, that comprises means for being lifted by conventional crane systems, and attachment means for being removably attached onto/into such transportation systems as truck platforms, ships, planes, train platforms.

In a preferred embodiment, the aseptic filling means comprises anti-contamination means like a hermetically sealed filling area with laminar flow of clean air in the handling area, to prevent contamination of beverage during the filling of packages.

Also preferably, the packages and the filling means are arranged in a hygienic chamber in such way that the packaging material can be replaced without infringing on the hygiene of said filling means.

In the latter embodiment, the hygienic chamber is preferably a removable cartridge. The fact that it is removable allows to safely and quickly replacing it when necessary.

Preferably, the apparatus according to the invention comprises a filling means with weighing means for the control of the filled volume into each package.

Alternatively, the filling means can comprise a volumetric filling system for the control of the filled volume of beverage into the package.

As another alternative, the filling means can comprise a flow meter and/or an intermediate tank for the control of the filled volume of beverage into the package.

In one preferred embodiment of the invention, the energy supply means comprise solar panels suitable for supplying at least 5%, preferably at least 50% of the energy required for operating said apparatus. Such solar panels can be disposed for instance on the top of the water storage unit.

Alternatively, the energy supply means can comprise a combustion engine. This combustion engine can be the engine of a truck that carries a whole apparatus according to the invention.

In another possible embodiment, the apparatus of the invention further comprises a storage and/or cutting and compression device for returned packaging material.

Advantageously, the stock of packages, the filling means, the closing means and energy supply means can be disposed onto a first mobile element, and the supply means can be disposed onto a second mobile element, so that the supply means and filling means can be removably connected in fluid communication.

In the last embodiment described above, the filling means can comprise water treatment means, which can be chemical and/or physical treatment (eg. microfiltration) for treating the beverage before filling into a beverage that is safe for consumption.

What is more, the apparatus according to the invention can further comprise printing and/or labelling means to print information such as date, time, lot, batch, truck, water source or all legal information concerning the product distributed to the consumer.

Finally, the apparatus according to the present invention preferably further comprises a dosing device for dosing into the beverage, liquid or dry ingredients such as flavors, minerals, plant extracts, vitamins, sugar/sweetener, nutritional complements, preservatives or a combination thereof.

### Brief description of the drawings

Additional features and advantages of the present invention are described in, and will be apparent from, the description of the presently preferred embodiments which are set out below with reference to the drawings in which:
**Figure 1** is a schematic perspective view, partially cut, of a mobile apparatus according to the invention ;
**Figure 2** is a schematic perspective view, partially cut, showing the apparatus of figure 1 that is connected to a mobile water source in fluid communication ;
**Figure 3** is a view similar to figures 1 or 2, showing another different embodiment of the apparatus ;
**Figure 4** is a schematic perspective view, partially cut, showing yet another embodiment of an apparatus according to the invention ;
**Figure 5** is a schematic perspective view that shows the filling, packing and sealing unit in an apparatus according to the invention ;
**Figure 6** is a schematic perspective view showing a detail of the sealing unit illustrated in figure 5 ;
**Figure 7** is a schematic perspective view, partially cut, of a replaceable cartridge containing packing, filling and sealing units, for an apparatus according to the invention ;
**Figure 8** **and** **9** are schematic profile views, partially cut, similar to figure 7 ;
**Figures 10A & 10B** are schematic, respectively side and front views, representing an integrated pouch manufacturing line for an apparatus according to the present invention ;
**Figure 11** is a schematic perspective view showing a roll of premade pouches manufactured with a line illustrated in figures 10A & 10B ;
**Figure 12** is a schematic view similar to figure 11, showing how a pouch is filled ;
**Figure 13** is a schematic perspective view showing the filling unit for premade pouches, according to the invention ;
**Figure 14** is a profile view similar to figure 13 where the filling needle is not yet inserted into the pouch filling opening ;
**Figure 15** is a profile view similar to figure 13 and 14, wherein the filling needle is inserted into the pouch filling opening, and a safe beverage is being packed therein ;
**Figure 16** is a schematic front view showing a pouch that is filled and sealed, and ready to be separated from the rest of the pouches roll ;
**Figure 17** is a view similar to figure 16, showing an alternative embodiment for the pouch construction ;
**Figure 18** is a view similar to figure 17, wherein one of the pouch is being opened into its dispensing configuration ;
**Figure 19** is a schematic front view showing yet another possible embodiment of a pouch construction, wherein each pouch is equipped with a carrying precut handle ;
**Figure 20** is a view similar to figure 19, wherein a pouch is detached from the rest of the pouch roll, and the precut handle is detached to be usable ;
**Figure 21** is a profile view similar to figure 20, illustrating how a used can carry the pouch, using the handle.

### Detailed description of the invention

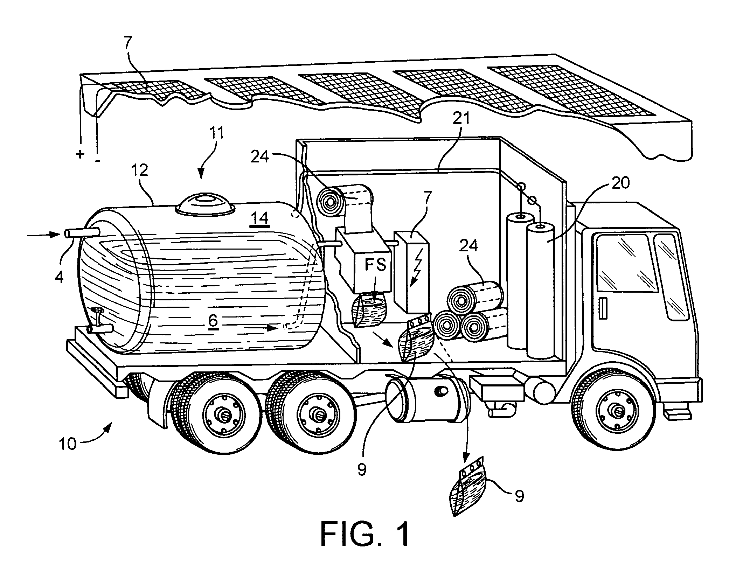

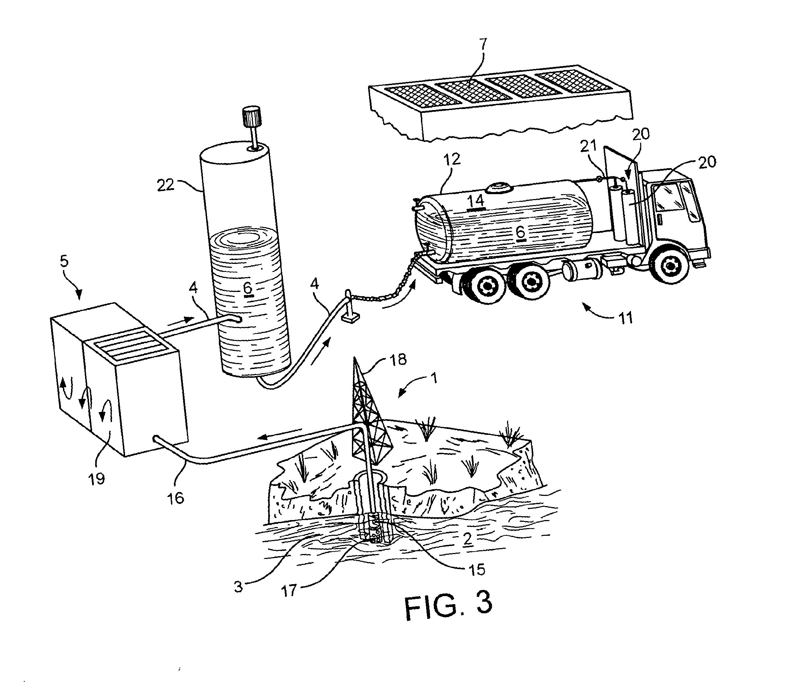

A first possible embodiment of the invention is illustrated in **figures 1****,** **2****, and** **3**. In this embodiment, an apparatus according to the invention is provided for the delivery of safe drinkable water, which comprises a combination of:
(i) one water-pumping unit 1, that is illustrated in detail in **figure 3****,** suitable for pumping unsafe drinkable water 2 from a water source 3 such as a pond, a river or a lake, said water pumping unit 1 comprising a system of pipes 4 - some of which are flexible for ease of use - for establishing a fluid communication with
(ii) one water treatment unit 5 suitable for producing safe drinkable water 6 by chemical and physical treatment of the water pumped from the source 3, said water-treatment unit 5 comprising a second system of pipes 4 for establishing a fluid communication with
(iii) one water packing unit 8 suitable for packing said safe water 6 into individual packages 9 for delivery to individual consumers,

By "safe" water, it is generally meant potable water that is free from harmful micro-organisms and substances, even if it may have unusual colour, odour, or taste due to dissolved minerals. In the case of the present invention, unusual colour, odour or taste are most preferably inexistent due to an additional treatment that removes specific undesirable dissolved minerals. That is to say, in the case of the present invention, the treated water is preferably not only safe for consumption, but also it has a clear colour, and its odour and taste are pleasing to the consumer.

All the connections between the different constitutive units of the apparatus can be made in a detachable manner.

According to the present invention, the apparatus is further **characterized in that** at least one of the three units is mobile. As can be seen in the drawing, the embodiment illustrated in **figures 1****,** **2** **and** **3** comprises a mobile packing unit. Particularly, the packing unit 8 that is shown in **figure 1** is mounted on a truck 10, so that the delivery of safe packed water can be done in different places. Such a system is particularly useful in case the packing operation and delivery to the consumer takes place in places with a difficult access for pedestrians, for instance after a natural catastrophe.

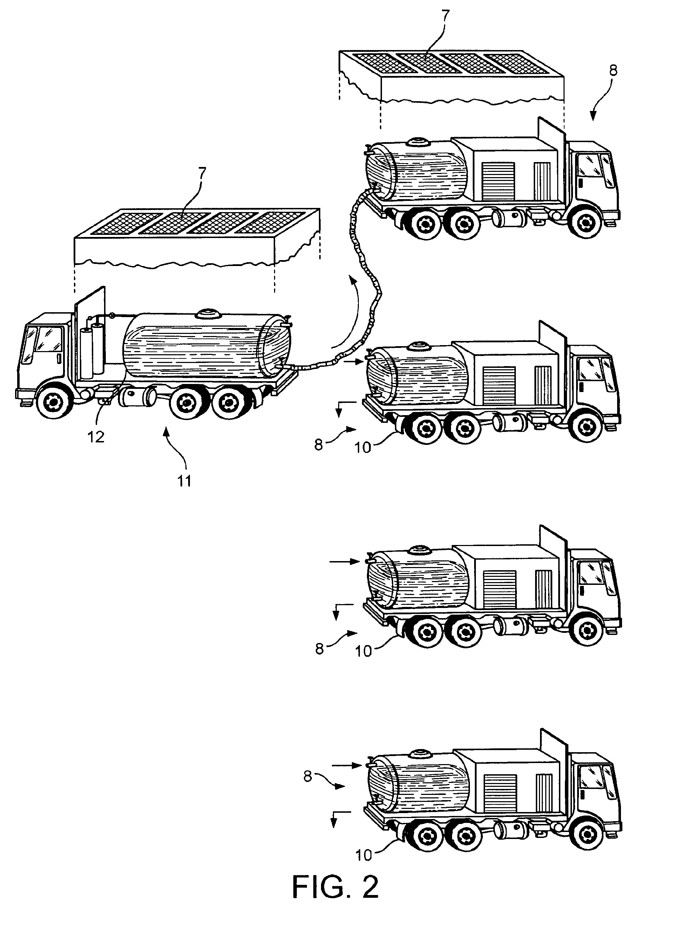

In this first embodiment of the invention that is shown in **figure 3**, the apparatus further comprises a water storing unit 11 for storing water treated by the water treatment unit 5. This water storing unit 11 is disposed between, and in fluid communication with, the water treatment unit 5 and the water packing unit 8. As illustrated in **figure 2** and **figure 3**, the water storing unit 11 is also mobile. More precisely, it is mounted on a truck 10. The storing capacity is very large, typically, at least 10000 litres of safe, purified, drinkable water can be stored therein.

As illustrated in **figure 1** and in **figure 2**, the truck 10 carrying the water packing unit is also equipped with a small tank for the storage of safe water. This allows the mobile packing and distribution unit 8 to move away from the water storing unit, and distribute several consumers located remote from the water treatment 5 and storing 11 units. Typically, the capacity of storage of the tank mounted in the mobile packing unit is about 1000 litres.

The fact that the apparatus according to the invention comprises a mobile water storing unit 11 having a large storing capacity, further improves the flexibility of usage of the said apparatus. With such a combination of mobile units 8, 11, large quantities of safe, purified water can be distributed to individual consumers that are remote from safe water sources, some of whom may additionally have limited communication and moving flexibility (eg. in deserted areas, or in case of flooding).

In order to even further increase the flexibility and action range of the apparatus, the latter can comprise several mobile water packing and distribution units 8 that are mounted on trucks 10, as illustrated in **figure 2**. With such a system, it is possible to alternatively fill the small tanks of the packing and distribution units 8 by connecting them one after the other in turn to the water storing unit 11. While mobile packing and distribution units are away for distribution of safe water, one of them is being filled. When the latter is filled, it can go to distribute water to the populations, and is replaced by another packing and distribution unit 8 that needs to be filled, etc.

In case the apparatus does not comprise a water storing unit, then the different mobile water packing units 8 can be linked by pipes and filled to the water treatment unit - not illustrated in figure 2 -.

Advantageously, as can be seen for instance in **figures 1****,** **2****,** **3****, or** **4** the storing unit 11 comprises a tank 12 and pressurizing means for pressurizing a gas into the headspace 14 of the tank 12. The pressurizing means are high pressure bottles 20 and gas used for the tank pressurization is nitrogen. This gas is conveyed to the tank 12 by means of safety pipes 21. Such a gas does not influence the taste and chemical characteristics of the safe purified water 6 stored in the tank 12, and is not harmful to the consumers health.

As illustrated in **figure 3**, the pumping unit 1 comprises a pump 15, a pipe network 16, and a strainer 17 suitable for pumping from a water tower 18, unsafe muddy water 2 that comes from underground natural water source 3.

The water treatment unit 5, as illustrated in **figure 3**, comprises filtering, microfiltering, and/or biochemical treatment means 19 suitable for producing safe drinkable water 6 out of the pumped unsafe water 2. The water treatment unit 5 further comprises a temporary water storage silo 22 for regulating the flow of purified water circulated between the treatment unit 5 and the mobile storing unit 11.

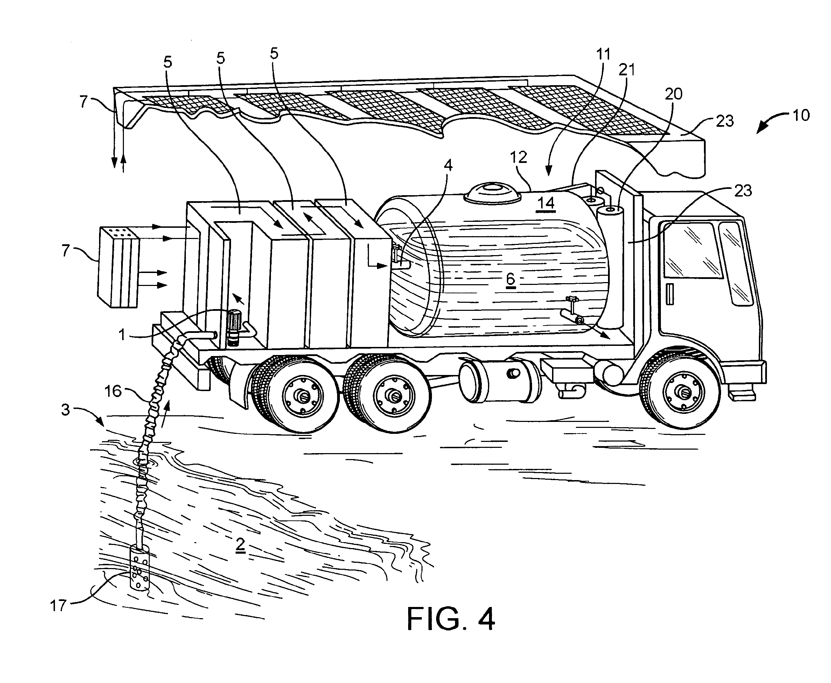

In a second possible embodiment of the present invention, that is illustrated in **figure 4**, the pumping, treatment and storing units 1, 5, 11, are altogether disposed in a single transportation freight container 23 (which size is according to ISO standards). The container 23 comprises attachment means - not illustrated in the drawing - for removably attaching said container onto/into such transportation systems as truck platforms, ships, planes, or trains. The **figure 4** represents the said container 23 (in partial and exploded view) mounted onto the platform of a truck 10.

Preferably, the movable container 23 described hereinbefore further comprises means - not illustrated in the drawing - for being lifted by conventional crane systems, for easier handling.

In this particular embodiment of the invention, the treatment unit comprises micro-filtration and chemical treatment to remove big particles, micro-organisms, viruses. It can also comprise a system to add minerals, vitamins, probiotics, or other similar healthy ingredients to the filtered water.

In the two possible embodiments of the invention described above in **figures 1****,** **2****,** **3** **and** **4**, the energy source 7 to the mobile units is furnished by solar panels connected to an electrical board installed within the packing unit 8. Alternatively, when the mobile units are mounted on trucks 10, the energy source 7 necessary to the operation of pumping, treatment, storing, and/or packing units could be provided by the truck engine, by means of an electricity generator.

Also in the embodiments described above, the water packing unit 8 comprises the following elements combined together.

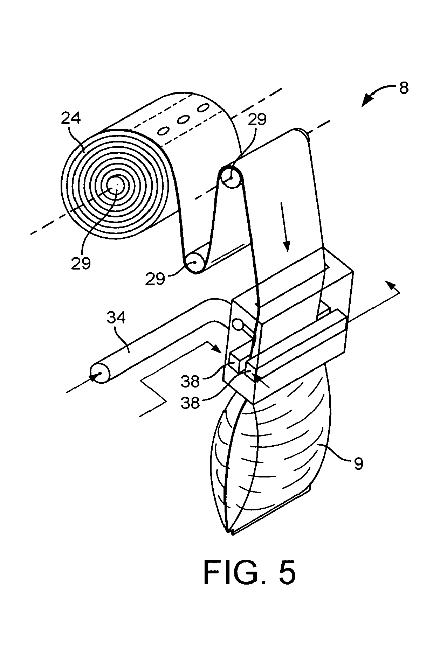

Firstly, the packing unit 8 comprises a stock of packages which is a roll of premade pouches 24, as illustrated in **figure 1** and **figure 5****.**

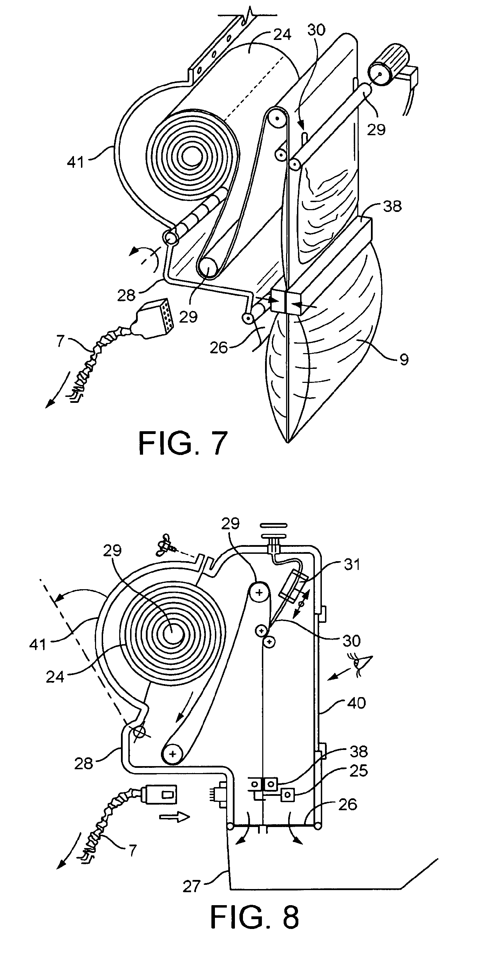

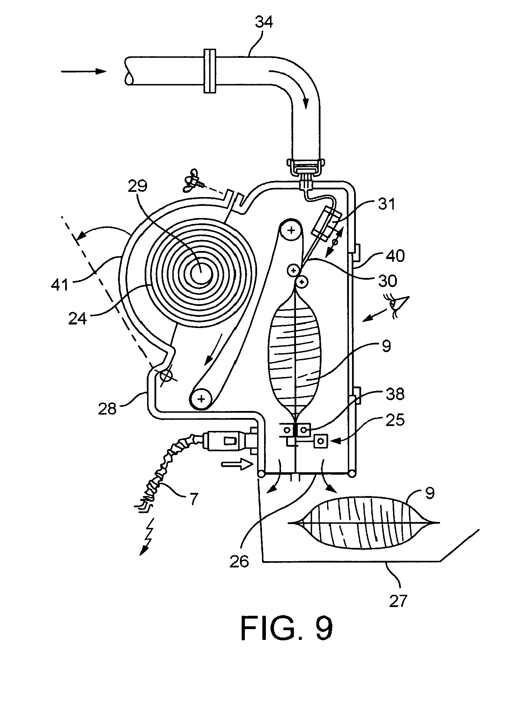

Secondly, the packing unit 8 also comprises a distributing system as shown in **figures 8** **and** **9** for distributing one package 9 at a time from the stock of packages 24, the said distributing system comprising a cutting means 25 to cut and separate one package 9 from the rest of the package rolls 24, once the said package 9 is filled and sealed, and a system of dispensing doors 26 with a dispensing drawer 27 to give the consumer an access to the filled pouch 9 once the latter is separated from the rest of packages/pouches roll 24 and has fell into the said drawer 27 as illustrated in **figure 9****.**

Thirdly, filling means are also provided for aseptically filling a package 9 with safe water 6 that has been treated within the treatment unit 5, as well as, fourthly, sealing means for sealing said package 9 after its filling. The filling and sealing means will be described more detailed here below.

Fifthly, the packing unit 8 further comprises a distributing system comprising dispensing doors 26 and a drawer 27 (described above with reference to **figures 8** **and** **9**) for the delivery of the filled and sealed packages 9 to a consumer.

As shown in **figures 7, 8** **and** **9**, said water packing unit 8 is in enclosed in a casing 28 so as to form a one-use hermetically closed cartridge.

As illustrated in **figures 5****,** **6****,** **7, 8****,** **9****,** **10A and figure 10B**, the filling means comprise one pair of rolls 29 for holding the package 9 that is being filled.

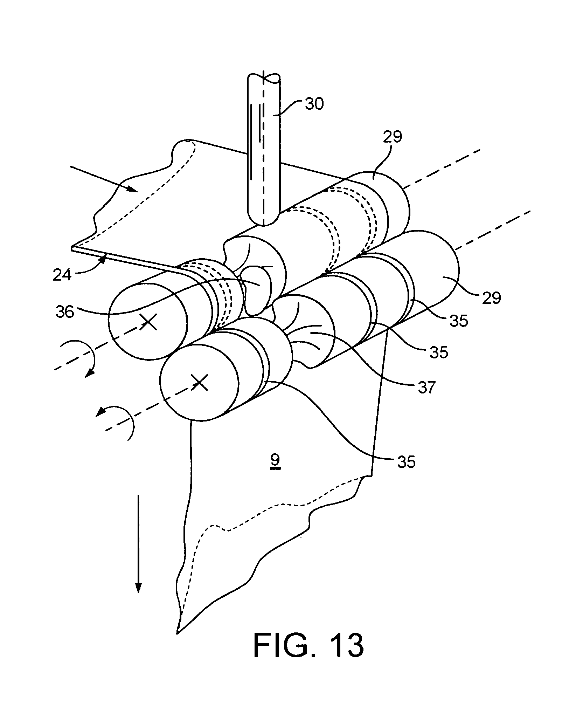

The rolls 29 comprise cooperating grooves 37 that define a passage through which a filling needle 30 can move to fill the package 9, as can be seen also in **figures 13****,** **14, and 15****.**

As illustrated in **figures 5 to 9**, the stock of packages 24 comprises premade film pouches 9 stored as a continuous roll of film, so that two adjacent pouches 9 in the roll 24 are linked in a detachable manner by a precut seam 46. These packages are non reclosable, and for that reason, they have an opening which is destructed by cutting, ripping, tearing, piercing, or a combination thereof.

In each pouch 9, the premade weld seam length represents at least 70% of the final weld seam length, in other words the area that is not seamed when the pouch is still in the roll of pouches, is less than 30% of the seam length that is necessary for having an entirely closed package.

Each package used to pack beverages in the field of the present invention, is preferably shaped such that the material constitutive of the package body in one cross-section, extends beyond the boundaries of the filling opening. This ensures that the dispensing opening of the package is somehow protected by the boundaries of the package, and is therefore more mechanically resistant. This is particularly important in case such packages are to be used in risky or otherwise mechanically aggressive environments, for instance if the water packages are pouches which are distributed during flooding or sandstorm.

Advantageously, the pouches 9 are manufactured as premade preferably decorated/printed package before they are filled in the apparatus according to the present invention.

In **figure 5**, one can see that the roll of pouches 24 is meant to be mounted into the apparatus according to the invention, such that the free end of pouches runs through filling means and sealing means that ensure respectively that safe water is filled into each pouch, and then said filled pouch 9 is sealed.

The filling means comprises a pipe 34 that conveys safe water 6 from the water treatment unit 5 or from the water storing unit 11. This pipe 34 is linked to a filling pump - not illustrated in the drawing - coupled to an electronic management system - not illustrated in the drawing - that synchronises the movements of the roll of pouches together with the filling pump and the sealing means. The pipe 34 is linked to the filling needle 30 that is movable in a back-and-forth movement relative to the pouch that is being filled, as can be see in detail in **figures 13****,** **14, and 15**. The needle 30 is moved with a piston-like system 31 that can be seen in **figure 8****.**

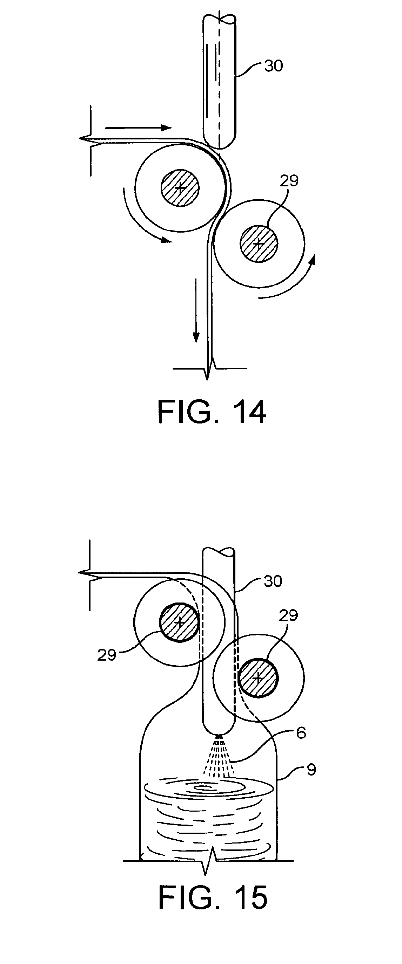

In **figures 13** **and** **14****,** one can see that a pouch 9 is being filled and is held by a pair of rolls 29, each roll being equipped with rubber surfaces 35 that have a gripping effect onto the surface of the pouch surface, so that the pouch does not slip away during the filling operation. The pouch 9 comprises a rounded opening 36 through which the filling needle 30 of the filling system can penetrate before the filling operation starts. Once the pouch is filled, the needle 30 is removed from the pouch, and the latter is sealed be the sealing means.

In **Figure 13** it is shown that the two rolls 29 of the said filling means that hold the pouch 9 during the filling operation, both comprise grooves 37, that are positioned in vis-à-vis one relative to the other, so that the two cooperating grooves define a channel which has a diameter superior or equal to that of the filling needle 30. During the filling operation, the unrolling movement of the roll of pouches 24 is preferably stopped.

**Figure 15** shows a pouch 9 disposed in relation to the filling means according to the invention, the pouch 9 being filled with safe drinkable water 6 through the filling needle 30.

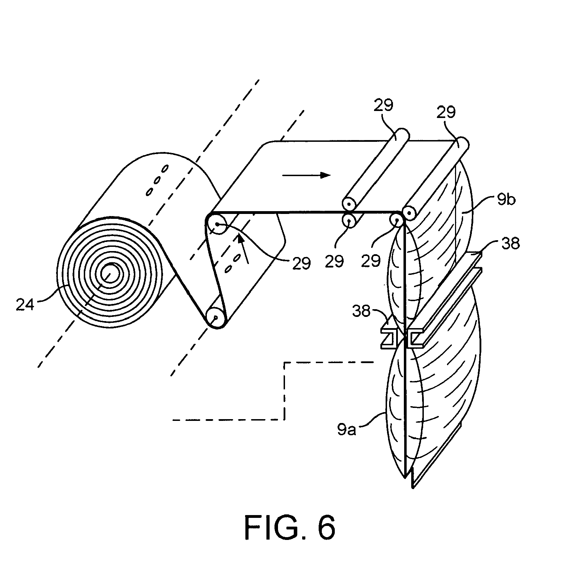

**Figure 6** shows a roll of pouches that is disposed in relation to the filling means and sealing means. One pouch 9a is already filled and is being sealed, and the pouch 9b above in the roll of pouches 24 is being filled. The sealing means comprise a pair of sealing jaws 38 that are movable in a back and forth movement by actuating means - not shown in the drawing - for instance a pneumatic piston, or an electric motor, similarly to sealing jaw systems commonly known to those skilled in the art.

Once a pouch 9 is filled with safe drinkable water 6, the roll of pouches 24 is unrolled, so that the upper edge 39 of the filled pouch is disposed between the sealing jaws 38. The unrolling movement is then stopped and the sealing jaws 38 are moved towards each other as illustrated with arrows in **figure 7**, so as to seal the opening 36 of the pouch 9, and then backwards. The unrolling operations then starts again so that the pouch that is filled and sealed can be directed to the cutting means to be detached from the roll of pouches 24, and fall into a distributing means

As already described above and as shown in **figure 8**, the roll of pouches 24, the filling means and the sealing and cutting means can be enclosed into a casing 28. Once a filled and sealed pouch 9 is detached from the roll of pouches 24, it falls into a dispensing drawer 27, as shown in **figure 9**. The front part of the casing 28 can be equipped with a window 40 for a consumer or an operator to watch the filling, sealing and cutting operations, as illustrated in **figure 9**. The casing 28 comprises a door 41 to access the interior of the said casing and replace the roll of pouches 24 when necessary. Alternatively, the casing 28 can be completely closed except for the opening that allows the output of filled and sealed packages, so that it is maintained in a relative aseptic environment.

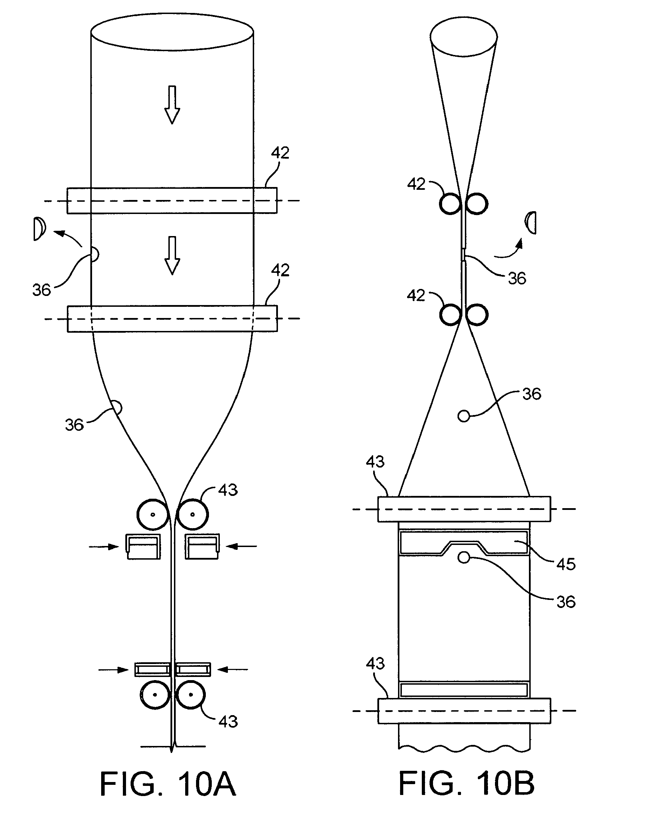

The pouches 9 described above are manufactured as a roll of pouches 24, with a continuous process illustrated in **figures 10A and 10B****,** wherein figure 10B is a 90°side view of the figure 10A, so as to show how the film is folded during the forming operation.

The roll of pouches 24 is formed out of a thermoplastic film that is rolled and sealed longitudinally into a tube. Two pairs of rolls 42 that are disposed spaced apart from one another fold the film, and openings 36 are cut by punching at regular intervals along the roll. Then, another pair of rolls 43 folds the tube of film at a 90° angle relative to the longitudinal axis of said tube, and two pairs of sealing jaws 44 seal the pouch at its upper and lower extremities, as illustrated **in** **figures 10A and 10** **B.** As can be seen in **figure 10B****,** the upper seal 45 has a specific shape which allows positioning this upper seal 45 very close to the pouch opening 36. At the same time the sealing jaws 44 create a seal to close the upper and lower edges of a pouch, they create transversal pre-cut lines 46 respectively above and below the upper and lower seals of the pouch. The pre-cuts are made by cutting tools - not shown in the drawings - that are integrated in the sealing jaws 44.

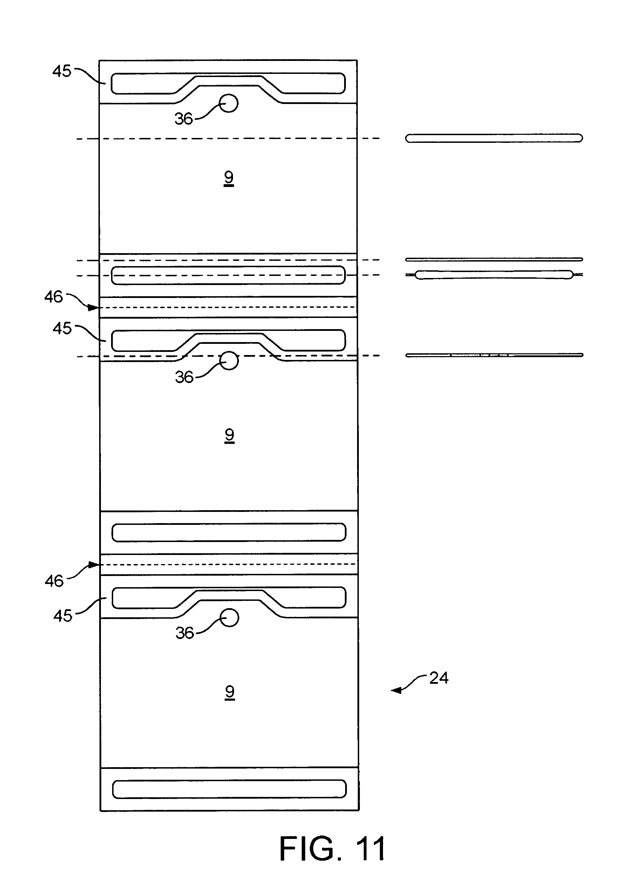

**Figure 11** illustrates a roll of pouches 24 that is obtained with a process as described above. One can see that two consecutive pouches 9 in the roll 24 are linked by a detachable - or tearable - pre-cut line 46 that is transversally disposed along the width of the roll.

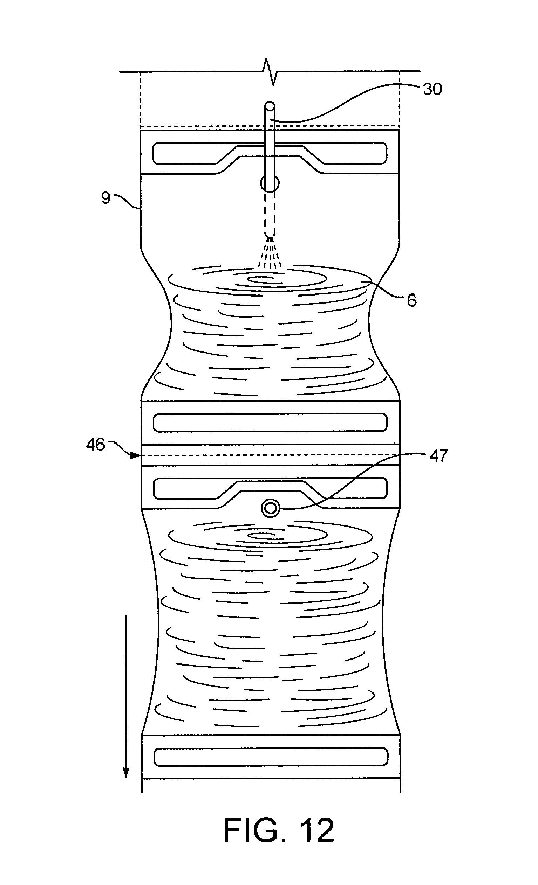

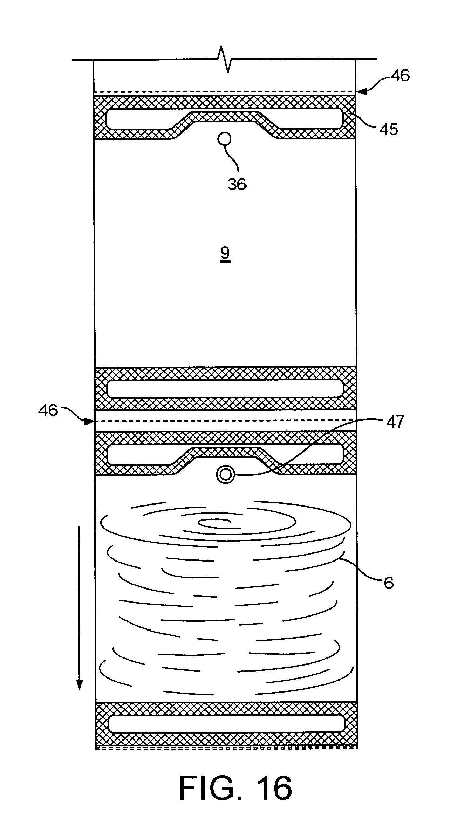

**Figures 12** **and** **16** show two consecutive pouches 9 in the roll of pouches 24. In **figure 12**, the upper pouch in the roll is being filled with safe drinkable water 6, by means of a filling needle 30 that is inserted into the pouch opening 36. In both figures 12 and 16, the lower pouch is already filled, and its opening 36 is sealed. It is ready to be detached from the rest of the roll 24 along the pre-cut line 46.

It is clear in **figure 16** which seals of the pouch 9 pre-exist before the filling step: the pouch opening 36 alone remains unsealed, until the filling step is completed. After the filling step, this opening 36 is sealed as well by a closing seal 47 that is rounded in shape to adapt to the opening shape. As for the other seals (or seams) of the pouch, the closing seal 47 is done by linking closely and completely the walls of the pouch. The filled pouch 9 is therefore completely and hermetically closed, since the closing seal 47 surrounds completely the opening 36 of said pouch. It is to be noted that the filling and sealing step are done in aseptic conditions. The shape of each pouch is generally parallelepipedic, for instance square, as illustrated in **figure 16****.**

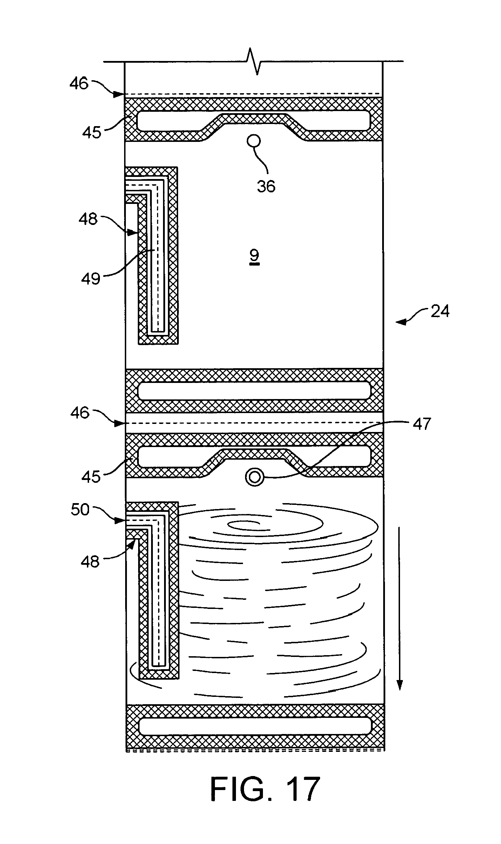

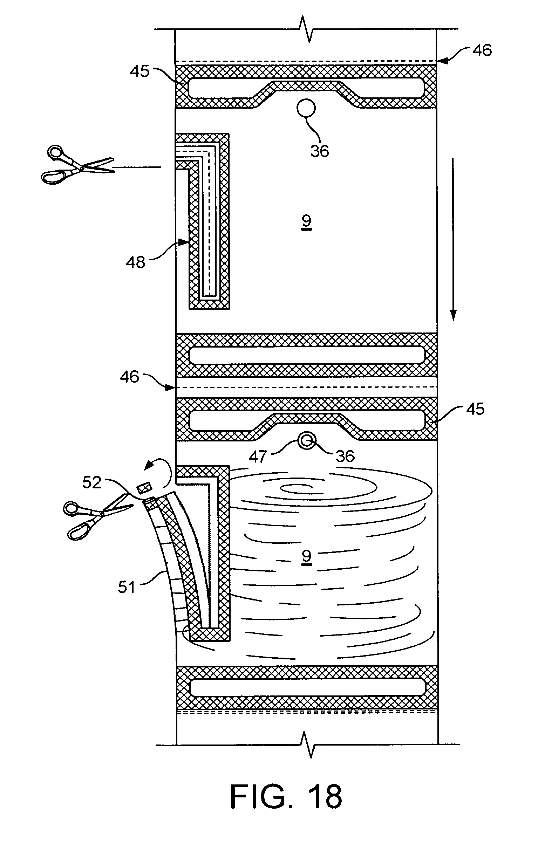

In **figures 17** **and** **18**, one can see an alternative pouch design. In this alternative embodiment, the shape of each pouch 9 is generally square or rectangular. Each pouch 9 is formed from a tubular film as described hereinabove, with upper and lower edges which are sealed transversally to close the pouch. Additionally in this embodiment, an L-shaped seal 48 is created that is generally parallel and adjacent to one side of the pouch. This L-shaped seal 48 is not sealed across its entire surface as can be seen in **figure 17**, but its central area 49 is not sealed and comprises a pre-cut line 50, disposed so that the portion of the pouch 9 located between the L-shaped seal 48 and the adjacent side wall can be detached to form a detachable spout 51 as illustrated in **figure 18**. As illustrated in **figure 18****,** the free end 52 of the detachable spout (once it is detached from the rest of the pouch 9) can be cut by the consumer before dispensing. The spout 51 creates a convenient way of dispensing the pouch contents, without requiring a complex shape of the pouch 9.

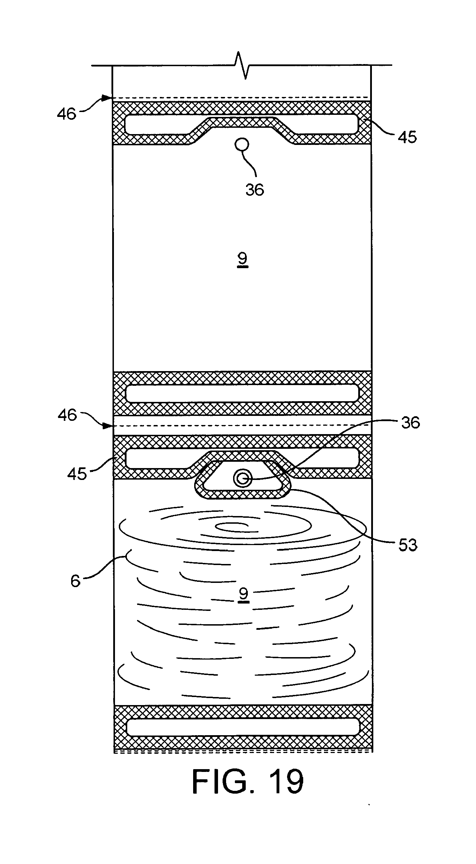

In **figures 19****,** **20** **and** **21** is illustrated another possible embodiment of a pouch to be used in an apparatus according to the present invention.

In **figure 19**, one can see that each pouch in the roll is generally as formerly described above, i.e. made from a tubular film which is sealed transversally to create the pouch. In this particular embodiment, the pouch 9 comprises an additional, generally U-shaped, seal 53 that comprises in its surface a pre-cut - not shown in the drawing -. This seal 53 surrounds the pouch opening 36 and is made after the pouch 9 is filled. The seal 53 is in fact shaped and disposed so that the opening 36 is completely enclosed between the U-shaped seal 53 and the upper seal of the pouch 45. In this way, when the seal 53 is made, the pouch is completely closed, as can be seen in **figure 19****.**

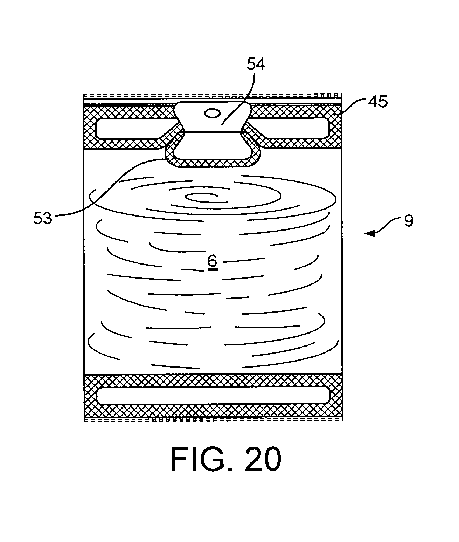

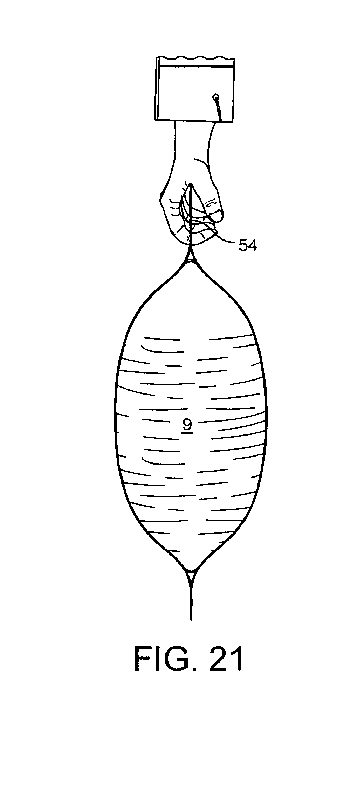

When the portion of the pouch that is enclosed in the U-shaped seal 53 is detached, the pouch remains closed, while an opening 54 is created at the same time, as illustrated in **figure 20**, so that a consumer can insert the hand to hold and carry the pouch as illustrated in **figure 21****.**

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications be covered by the appended claims.

## Claims

1. An apparatus for the delivery of safe beverages, preferably safe drinkable water, **characterized in that** it comprises a combination of :
(i) at least one water-pumping unit (1) suitable for pumping unsafe drinkable water (2) from a water source (3), said water pumping unit (1) comprising means (4, 16) for establishing a fluid communication with
(ii) at least one water treatment unit (5) suitable for producing safe drinkable water (6) by chemical and/or physical treatment of the water (2) pumped from said source (3), said water-treatment unit (5) comprising means (4) for establishing a fluid communication with
(iii) at least one water packing unit (8) suitable for packing said safe water (6) into individual packages (9) for delivery to individual consumers,
said apparatus being further **characterized in that** at least one of the three units (1, 5, 8) is mobile.

2. An apparatus according to claim 1, which further comprises a water storing unit (11) for storing water (6) treated by the water treatment unit (5), said water storing unit (11) being disposed between the water treatment unit (5) and the water packing unit (8).

3. An apparatus according to the preceding claim 2, wherein the storing unit (11) comprises a tank (12) and pressurizing means (13) for pressurizing a gas into the headspace (14) of the tank (12).

4. An apparatus according to claim 3, wherein the gas used for the tank (12) pressurization is nitrogen.

5. An apparatus according to any of the preceding claims, wherein said pumping unit (1) comprises a pump (15), a pipe network (16), optionally equipped with a strainer (17), suitable for pumping water from a water tower (18), a water pond, river, lake, sea, or from a well or similar underground natural water source (3).

6. An apparatus according to any of the preceding claims, wherein said water treatment unit (5) comprises filtering, microfiltering, and/or biochemical treatment means (19) suitable for producing safe drinkable water (6) out of the pumped unsafe water (2).

7. An apparatus according to any of the preceding claims, wherein said pumping (1) and treatment (5) units are disposed in a container (23) - preferably a transportation freight container according to ISO standards - comprising attachment means for removably attaching said container (23) onto/into such transportation systems as truck platforms, ships, planes, or trains.

8. An apparatus according to claim 7, wherein said container (23) further comprises means for being lifted by conventional crane systems.

9. An apparatus according to any of the preceding claims, wherein said water packing unit (8) comprises:
(i) a stock of packages (24),
(ii) filling means (29, 30, 31, 34, 35, 37) for aseptically filling a package (9) with safe water (6) that was previously treated within the treatment unit (5), and
(iii) sealing means for hermetically sealing said package (9) after its filling,
(iv) a distributing system (25, 26, 27) for the delivery of the filled and sealed individual packages (9) to a consumer.

10. An apparatus according to the preceding claim 9, wherein said water packing unit (8) is a one-use hermetically closed cartridge.

11. An apparatus according to the preceding claims 9 or 10, wherein said filling means comprise at least one pair of rolls (29) for holding the package (9), said rolls comprising cooperating grooves (37) that define a passage through which a filling needle (30) can move to fill the package (9) through its opening (36).

12. An apparatus according to any of the preceding claims 9 to 11, wherein said stock of packages (24) comprises premade film pouches (9) stored as a continuous roll, so that to adjacent pouches (9) in the roll are linked in a detachable manner by a precut line (46).

13. An apparatus according to any of the preceding claims 1 to 12, **characterized in that** the premade package (9) is containing dry or liquid ingredients such as flavors, minerals, plant extracts, vitamins, sugar/sweetener, nutritional complements, preservatives prior to its final filling.

14. An apparatus according to at least one of the claims 1 to 13, **characterized in that** the package (9) has several separate chambers that can be arranged in different configurations so that it is self standing with a base area similar to a circle, snail, star, triangle or bar-bell.

15. An apparatus according to any of the preceding claims, wherein the aseptic filling means comprises anti-contamination means to prevent contamination of beverage during the filling of packages.

16. An apparatus according to any of the preceding claims, wherein the roll of packages (24) and the filling means (29, 30, 31, 34, 35, 37) are arranged in a hygienic chamber (28).

17. An apparatus according to claim 16, wherein the hygienic chamber is a removable cartridge (28).

18. An apparatus according to any of the preceding claims, wherein the filling means further comprise weighing means for the control of the filled volume into each package (9).

19. An apparatus according to any of the claims 1 to 17, wherein the filling means further comprise a volumetric filling system for the control of the filled volume of beverage into the package.

20. An apparatus according to any of the claims 1 to 17, wherein the filling means further comprise a flow meter and/or an intermediate tank for the control of the filled volume of beverage into the package.

21. An apparatus according to any of the preceding claims 1 to 20, wherein the energy supply means comprise solar panels suitable for supplying at least 5%, preferably at least 50% of the energy required for operating said apparatus.

22. An apparatus according to any of the preceding claims, wherein said energy supply means comprise a combustion engine.

23. An apparatus according to claim 22, wherein said combustion engine is the engine of a truck (10).

24. An apparatus according to claim 23, wherein filling means (32) comprise water treatment means for partially or fully treating the beverage before filling, into a beverage that is safe for consumption.

25. An apparatus according to any of the preceding claims, which further comprises printing and/or labelling means to print information such as date, time, lot, batch, truck, water source or all legal and necessary information.

26. An apparatus according to any of the preceding claims, which further comprises a dosing device for dosing into the beverage, liquid or dry ingredients such as flavors, minerals, plant extracts, vitamins, sugar/sweetener, nutritional complements, preservatives or a combination thereof.
